Europäisches Patentamt

European Patent Office

Office européen des brevets

(19)

(11) Publication number : **0 665 134 A2**

(12) **EUROPEAN PATENT APPLICATION**

(21) Application number : **95300526.1**

(22) Date of filing : **27.01.95**

(51) Int. Cl.$^6$ : **B60Q 1/14**

(30) Priority : **29.01.94 CN 94201978**

(43) Date of publication of application :
**02.08.95 Bulletin 95/31**

(84) Designated Contracting States :
**AT BE CH DE DK ES FR GB GR IE IT LI LU MC
NL PT SE**

(71) Applicant : **SHENYAN ENTERPRISE INT'L PTE
LTD.
42 Kian Teck Road
Singapore 2262 (SG)**

(72) Inventor : **Xu, Hong Cheng, Beijing Chant
Electr. Techn. Co.
No. 15,
Wudaokou,
Haidian District
Beijing (CN)**

(74) Representative : **Driver, Virginia Rozanne et al
Page White & Farrer
54 Doughty Street
London WC1N 2LS (GB)**

(54) **Dimmer controller circuit for automobile headlamps.**

(57) A control circuit comprises an input circuit, a noninverting amplifier circuit, a inverting amplifier circuit, a low-pass filter, a voltage divider circuit, a Schmitt circuit, a rectangular-wave generator, a voltage comparator and an output circuit. Receiving a state-changing driving signal from the control circuit, the relay amplifies the signal to drive itself into action, thus controlling the headlamp to automatically switch between the high and low lights. The present invention has the control circuit integrated into a thick film IC block.

FIG. 1

EP 0 665 134 A2

The present invention relates to a dimmer controller circuit for automobile headlamps.

The controller circuit is the core of a dimmer in a car, wherein the electric signal generated by a photoelectric probe having been transmitted to the controller circuit for subsequent processing such as amplifying, filtering, shaping, delaying and comparing etc., a relatively clear signal is obtained to determine the switching between "high light" and "low light" modes, and by transmitting a mode-switching driving signal via a control line CT to the actuating relay, the signal is amplified by the relay to drive the relay into action, thus controlling the headlamp and automatically switching between "high light" and "low light".

A problem present in the currently available dimmer controller circuit is that it lacks a flashing to suggest human operation, unable to hint the approaching car to dip the light. For example, the controller circuit provided in the Chinese patent No. 87200673U entitled "Dimmer Automatic Control Device That Improves Safety In Driving" is one without flashing to suggest human operation.

A further problem is that the controller circuit being composed of discrete elements abutting together, suffers from drawbacks of the need to handle a large number of components and welding points, to consume much time in assemblage, too bulky for transport, too costly to manufacture, and relatively low in reliability.

The object of the present invention is to provide a technical solution for a controller circuit with flashing to suggest human function and improved operational reliability.

The present invention involves a control circuit comprising a signal input circuit, a noninverting amplifier circuit, an inverting amplifier circuit, a low-pass filter, a voltage divider circuit, a Schmitt circuit, a rectangular-wave generator, a voltage comparator and an output circuit, wherein a diode D7, a capacitor C8, a resistor R3 constitute the input circuit, an operational amplifier U1, R1, R4 constitute the inphase amplifier; resistors R5, R6, R7, R2 and the operational amplifier U2 constitute the inverting amplifier; resistors R10, R12 and a capacitor C8 constitute the low-pass filter; resistors R8, R9, R13 and R25 constitute the voltage divider circuit; resistors R11, R14 and an operational amplifier U3 constitute a Schmitt circuit; a capacitor C7, resistors R21, R22, R23, a capacitor C4, a resistor R24 and an operational amplifier U5 constitute a second Schmitt circuit; resistors R25, R26 and an operational amplifier U6 constitute the voltage comparator; and a triode BG1, a resistor R27 and a diode D4 constitute the output circuit connected to the signal line CT of the relay.

The relay receiving a mode-change signal from the control circuit amplifies the signal to drive the relay into action, thereby controlling the headlamp of a car to automatically switch between "high light" and "low light". An additional function of the relay is to disconnect the power supply circuit to the controller to interrupt the operation of the controller and retreat from automatic operation when a manual switch is set to a low-light position. In order to ensure the operational stability of the controller, the control circuit in the present design is made into IC of thick film circuit block, with specific configuration of all components other than four capacitors C3, C4, C5 and C8 and two debugging resistors R1 and R2 to be integrated into an IC block having overall dimension not larger than 30mm x 20mm and 10 pins from the first through the tenth respectively for U1(5), U7(6), U2(10), U2(8), U1(4), D1(5), U4(6), U5(10), D4(+) and earth.

An embodiment of the control circuit according to the present invention is illustrated in the enclosed drawings, in which

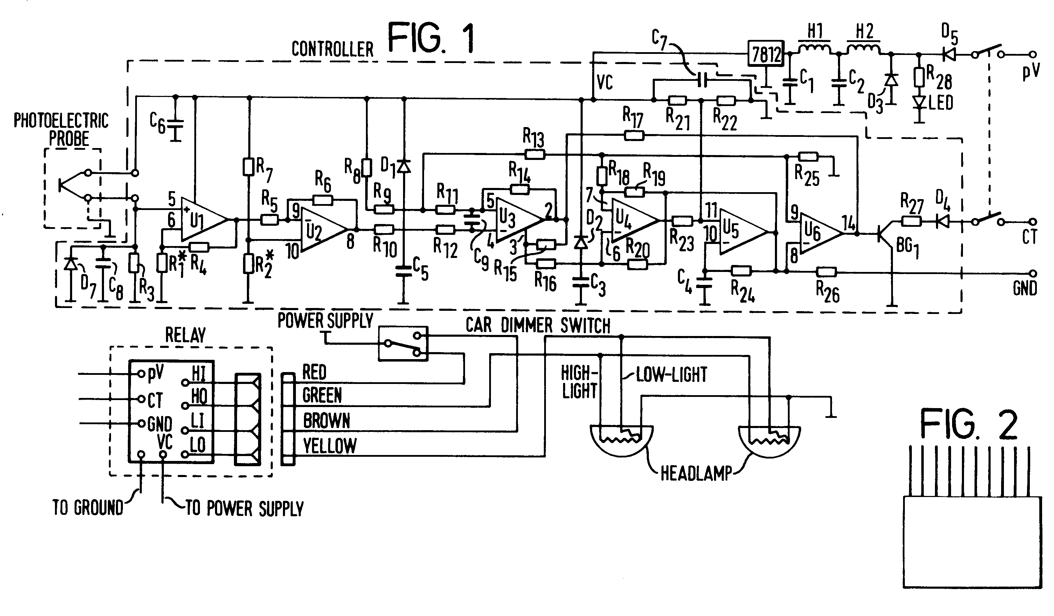

Figure 1 is the configuration of the circuit according to the present invention.

Figure 2 is the schematic view, of the integrated thick film circuit.

In the drawings, the reference symbols represent:

| | | | |
|---|---|---|---|
| D: | a diode | BG: | a triode |
| C: | a capacitor | R: | a resistor |
| U: | an operational amplifier | PV: | a power line |
| CT: | a signal line | K: | a dimmer switch |
| HI, HO: | signal lines for high light | LI, LO: | signal lines for low light |
| Q: | a headlamp | | |

The present invention will be specifically described in combination with the drawings.

In the drawings, the phantom line represents an IC portion. The composition of the thick film circuit is: the noninverting amplifier composed of the input circuit D7, C8, R3; and the operational amplifier U1, R1 and R4; the inverting amplifier composed of R5, R6, R7, R2 and the operational amplifier U2; the low-pass filter composed of R10, R12 and C5; with c9 functioning to short circuit the high-frequency signal; and to provide the divider circuit composed of R8, R9, R13 and R25; with the reference potential for the operational amplifiers U3, U4 and U6, the Schmitt circuit composed of R11, R14 and the operational amplifier U3; the rectangular-wave generator composed of C3, D2, R18, R19, R20 and the operational amplifier U4; the Schmitt circuit composed of C7, R21, R22, R23, C4, R24 and the operational amplifier U5; the voltage comparator composed of R25, R26 and U6; and the output circuit composed of the triode BG1, R27 and the diode D4.

The operating principle of the whole block of thick film circuit will be briefly described as follows.

During night driving of a car with the safety controller thereof in the automatic operating mode, i.e. being connected to a corresponding power source, the photoelectric probe will output minimal current if no car is approaching head-on and will output fairly large current when a car is approaching head-on, and thereafter will the output current reduce again. The process of the automatic switching to a low light when approaching another car is that the photoelectric probe will thus output a positive "step" signal, which is transmitted to the thick film controller to be successively non-inverting and inverting amplified by the operational amplifiers U1 and U2, respectively, to transform the signal into a signal in opposite phase, from which the possible unwanted HF noise is removed by the low-pass filter composed of R10, R12 and C5, and the bad effect produced by the parasitic noise possibly present in the signal eliminated so that relatively good rectangular signal will appear at the output U2 of U3, whereby allowing the application of a constant positive voltage on C3 to the inverting terminal of the rectangular wave generator U4, which, with U4 unchanged, will set the output 14 of the operational amplifier U6 into low control level, resulting in the transmission of the positive rectangular signal at the output 2 of the operational amplifier U3 via resistance R17 to the base of the triode BG1, which is thus turned into conductive, producing at the output thereof a downward rectangular signal, which, having been amplified by the amplifier circuit, puts the relay into action, switching the headlamp into low illumination when the control signal is in high level (a, b), while the red and green wires are disconnected and the three wires in red, brown and yellow are connected.

When a car is in an overtaking or turning condition, it is necessary to flash the headlamp to signal the head-on approaching car. It is only then that the operational amplifiers U4, U5, U6 come into action, which requires parallel cooperation with the original manual dimmer switch in the car. In the automatic low-light mode, the switching of the manual switch from high-light to low-light position interrupts the power supply circuit to the thick-film controller, and C3 will be thus discharging through the diode D2, and so will be C4 through resistance R24 and R26. The resetting of the manual switch to the high-light position will restore the power supply to the thick-film controller, resulting in U3's generation of a rectangular signal, which is transmitted to the voltage comparator U6 for signal comparison after Schmitt wave-shaping by the operational amplifier U5. The triode DG1 on receiving at its base a normal rectangular signal output from the output 14 of the operational amplifier U6 turns into the state of conduction and generates at the output CT a downward rectangular pulse which is transmitted to the relay portion to actuate the contacts of the relay into action thus controlling the switching of HI HO to LI LO thereby achieving the automatic switching of the headlamp Q to incur multiple automatic switching between high light and low light, allowing the headlamp to generate a hinting signal.

With the exception of four capacitors C3, C4, C5 and C8 and two debugging resistors R1∗ and R2∗, the remaining components can be integrated into integral block of controller, with a size not larger than 30 x 20mm, the pins thereof being shown in Figure 2.

## Claims

1. A control circuit for an automatic dimmer controller in a car, characterized in that the control circuit comprises a signal input circuit, a non-inverting amplifier circuit, an inverting amplifier circuit, a low-pass filter, a voltage divider circuit, a Schmitt circuit, a rectangular-wave generator, a voltage comparator and an output circuit, wherein, a diode D7, a capacitor C8, a resistor R3 constituting the input circuit; an operational amplifier U1, R1, R4 constituting the non-inverting amplifier; R5, R6, R7, R2 and an operational amplifier U2 constituting the inverting amplifier; R10, R12 and C5 constituting the low-pass filter; R8, R9, R13 and R25 constituting the voltage divider circuit; R11, R14 and an operational amplifier U3 constituting a Schmitt circuit; C3, D2, R18, R19, R20 and an operational amplifier U4 constituting the rectangular-wave generator; C7, R21, R22, R23, C4, R24 and an operational amplifier U5 constituting a second stage Schmitt circuit; R25, R26 and U6 constituting the voltage comparator; a triode BG1, R27 and D4 constituting the output circuit connected to the signal contact of the relay.

2. A control circuit as claimed in claim 1, characterized in that with the exception of the four capacitors C3, C4, C5 and C8 and two debugging resistors R1 and R2, all of the other elements are integrated into an IC block, with the overall dimension thereof not larger than 30mm x 20mm and 10 pins from the first through the tenth respectively for U1(5), U1(6), U2(10), U2(8), U1(4), D1(5), U4(6), U5(10), D4(+) and earth.

FIG. 1

FIG. 2

EP 0 665 134 A2